# FASCICULE DE BREVET EUROPEEN

(11) **EP 2 575 340 B1**
(45) Date de publication et mention de la délivrance du brevet: **13.08.2014**
(21) Numéro de dépôt: 12186148.8
(22) Date de dépôt: 26.09.2012
(51) Int. Cl.: H04M 3/533

(54) **Procédé et dispositif de modification d'un message vocal composé**
Verfahren und Vorrichtung zur Änderung einer zusammengesetzten Sprachmitteilung
Method and device for modifying a composed voice message

(30) Priorité: 29.09.2011 FR 1158754
(43) Date de publication de la demande: 03.04.2013
(73) Titulaire: Orange, 75015 Paris (FR)
(72) Inventeur: Moncomble, Ghislain, 22300 Lannion (FR)

(56) Documents cités:
- WO-A1-02/054803
- WO-A1-2007/058522
- US-A- 5 146 487

## Description

### Domaine de l'invention

L'invention se situe dans le domaine de la messagerie vocale. Elle concerne un procédé et un dispositif de modification d'un message vocal composé.

### Art antérieur

Un service de messagerie vocale permet à un appelant de déposer un message vocal à destination d'un appelé sur un serveur de messagerie. L'appelé peut ensuite consulter soit vocalement, soit visuellement, les messages vocaux qui lui ont été envoyés. Les interactions possibles pour un appelé sur un message vocal déposé par un appelant sont aujourd'hui limitées.

Le document US20040042595 A1 propose un procédé permettant à un appelant ayant déposé un message vocal sur la messagerie d'un appelé de modifier le message vocal préalablement déposé si l'appelant dispose d'un identifiant du message vocal déposé.

Le document EP1117242 A2 propose un procédé permettant à un appelé d'envoyer à un appelant une réponse vocale à un message vocal déposé par l'appelant.

Le document WO 2007/058522 A1 propose un procédé permettant à un appelant de composer un message personnalisé comprenant plusieurs composantes.

### Inconvénient de l'art antérieur

Un destinataire d'un message vocal qui a été modifié par un ou plusieurs émetteurs ne dispose que des informations contenues dans le message vocal énoncé par l'émetteur.

De plus, le destinataire ne peut pas identifier facilement, ni écouter ou agir séparément sur les composantes vocales du message vocal correspondant à un ou des émetteurs particuliers.

### Exposé de l'invention

Un des buts de l'invention est d'apporter des améliorations par rapport à l'état de la technique.

Elle propose à cet effet un procédé de modification d'un message vocal composé comprenant au moins une première composante vocale. Le procédé comprend une étape d'obtention d'au moins une seconde composante vocale, une étape de mise à jour d'au moins une information appartenant à un groupe d'informations associé au message vocal composé en fonction de la au moins une seconde composante vocale, et une étape de mise à disposition du message vocal composé comprenant les au moins une première et seconde composantes vocales, et le groupe d'informations associé au message vocal composé. Le message vocal composé est destiné à être consulté par au moins un utilisateur destinataire.

Par composante vocale, on entend ici une composante vocale émise ou prononcée par un utilisateur ou bien une composante audio correspondant à un flux audio tel que par exemple un flux musical.

Ainsi, il est possible pour un utilisateur d'ajouter une composante vocale à un message vocal existant. Par exemple, l'utilisateur peut répondre à au moins un émetteur du message vocal, à n'importe quelle position dans le message vocal.

Les informations associées au message vocal mises à jour automatiquement sont alors disponibles pour une consultation ultérieure du message vocal et/ou des informations associées au message vocal, par le destinataire du message vocal.

En outre, le destinataire du message vocal peut disposer d'informations concernant les différentes modifications apportées au message vocal composé.

Les différents modes ou caractéristiques de réalisation mentionnés ci-après peuvent être ajoutés indépendamment ou en combinaison les uns avec les autres, aux étapes du procédé de modification d'un message vocal composé défini ci-dessus.

Selon un mode particulier de réalisation de l'invention, le groupe d'informations associé au message vocal composé comprend au moins une première, respectivement une seconde, information associée à la au moins une première, respectivement seconde, composante vocale. L'information associée à une composante vocale peut par exemple appartenir à un groupe comprenant une information de position de la composante vocale dans le message vocal composé, une information de durée de la composante vocale, au moins une information relative à l'utilisateur émetteur de la composante vocale, la transcription textuelle de la composante vocale, ou une information d'horodatage relative à la composante vocale.

Ainsi, le destinataire dispose d'informations relatives à chacune des composantes vocales du message.

Selon un autre mode particulier de réalisation de l'invention, le procédé de modification d'un message vocal composé comprend une étape de montage d'un message vocal global par concaténation des au moins une première et seconde composantes vocales en fonction d'au moins une information du groupe d'informations associé au message vocal composé.

Les composantes vocales du message vocal peuvent alors être écoutées par le destinataire sous la forme d'une séquence audio unique, par exemple si le terminal du destinataire est un terminal basique, n'ayant pas de fonctionnalité de visualisation du message vocal.

Selon un autre mode particulier de réalisation de l'invention, l'étape de montage du message vocal global est effectuée suite à la réception d'une demande de consultation du message vocal composé en provenance de l'utilisateur destinataire. Les ressources de montage audio ne sont ainsi utilisée que si nécessaire.

Selon un autre mode particulier de réalisation de l'invention, la seconde composante vocale est une composante vocale prédéfinie appartenant à un groupe comprenant un silence, un flux audio musical choisi en fonction du au moins un utilisateur destinataire, un flux audio publicitaire.

Des composantes vocales supplémentaires peuvent ainsi être ajoutées entre les composantes vocales des émetteurs du message vocal afin de faciliter la transition entre les composantes vocales des émetteurs par exemple, ou de rendre le message vocal plus attractif lors de l'écoute par le destinataire.

L'invention concerne aussi un procédé de consultation par un utilisateur destinataire d'un message vocal composé comprenant au moins une première et une seconde composantes vocales et un groupe d'informations associé au message vocal composé. Le procédé de consultation comprend les étapes de réception d'au moins une première composante vocale du message vocal composé et du groupe d'informations associé au message vocal composé et de restitution sous une forme visuelle et/ou vocale de la au moins une première composante vocale en fonction du groupe d'informations associé au message vocal composé.

Le destinataire du message vocal a ainsi une représentation visuelle du message vocal. Le destinataire peut facilement identifier et sélectionner les composantes vocales du message qu'il souhaite écouter.

Les différents modes ou caractéristiques de réalisation mentionnés ci-après peuvent être ajoutés indépendamment ou en combinaison les uns avec les autres, aux étapes du procédé de consultation d'un message vocal composé défini ci-dessus.

Selon un autre mode particulier de réalisation de l'invention, le procédé de consultation d'un message vocal composé comprend une étape de restitution visuelle d'au moins une information appartenant au groupe d'informations associé au message vocal composé, la au moins une information étant associée à une composante vocale du message vocal composé.

Le destinataire du message vocal a par exemple accès à des informations concernant les émetteurs des composantes vocales du message.

Selon un autre mode particulier de réalisation de l'invention, le procédé de consultation d'un message vocal composé comprend une étape d'affichage d'au moins une action pouvant être exécutée, l'action étant définie en fonction d'au moins une information associée à une composante vocale restituée et appartenant au groupe d'informations associé au message vocal composé.

Le destinataire du message vocal peut ainsi choisir de répondre à un des émetteurs du message vocal par exemple ou transférer le message vocal à un autre destinataire.

L'invention concerne également un procédé de montage d'un message vocal global à partir d'un message vocal composé comprenant au moins une première et seconde composantes vocales et un groupe d'informations associé au message vocal composé. Le procédé de montage comprend une étape de lecture des au moins une première et seconde composantes vocales stockées et d'au moins une information du groupe d'informations associé au message vocal composé, et une étape de concaténation des au moins une première et seconde composantes vocales en fonction de la au moins une information lue du groupe d'informations associé au message vocal composé.

Le groupe d'informations permet ainsi d'effectuer le montage audio des composantes vocales du message en une séquence audio unique.

Les différents modes ou caractéristiques de réalisation mentionnés ci-après peuvent être ajoutés indépendamment ou en combinaison les uns avec les autres, aux étapes du procédé de montage d'un message vocal global défini ci-dessus.

Selon un autre mode particulier de réalisation de l'invention, le procédé de modification d'un message vocal composé comprend une étape d'insertion d'au moins une composante vocale synthétisée correspondant à au moins une information appartenant au groupe d'informations associé au message vocal composé et associée à la au moins une première ou seconde composante vocale.

Le destinataire du message vocal dispose ainsi d'une restitution vocale d'une information associée à une composante vocale du message vocal.

Les différents modes ou caractéristiques de réalisation mentionnés ci-dessus en référence au procédé de consultation d'un message vocal composé peuvent être ajoutés indépendamment ou en combinaison les uns avec les autres, aux étapes du procédé de modification d'un message vocal composé défini ci-dessus.

Les différents modes ou caractéristiques de réalisation mentionnés ci-dessus en référence au procédé de montage d'un message vocal global peuvent être ajoutés indépendamment ou en combinaison les uns avec les autres, aux étapes du procédé de modification d'un message vocal composé défini ci-dessus.

L'invention concerne aussi un dispositif de modification d'un message vocal composé comprenant au moins une première composante vocale. Le dispositif de modification comprend des moyens d'obtention d'au moins une seconde composante vocale, des moyens de mise à jour d'au moins une information appartenant à un groupe d'informations associé au message vocal composé en fonction de la au moins une seconde composante vocale, et des moyens de mise à disposition du message vocal composé comprenant les au moins une première et seconde composantes vocales, et le groupe d'informations associé au message vocal composé.

L'invention concerne également un terminal comprenant un dispositif de modification tel que cité ci-dessus.

L'invention concerne également un serveur comprenant un dispositif de modification tel que cité ci-dessus.

L'invention concerne aussi un dispositif de consultation d'un message vocal composé comprenant au moins une première et une seconde composantes vocales et un groupe d'informations associé au message vocal composé. Le dispositif de consultation comprend des moyens de réception d'au moins une première composante vocale du message vocal composé et du groupe d'informations associé au message vocal composé, et des moyens de restitution sous une forme visuelle et/ou vocale de la au moins une première composante vocale en fonction du groupe d'informations associé au message vocal composé.

L'invention concerne aussi un terminal comprenant un dispositif de consultation tel que cité ci-dessus.

L'invention concerne également un terminal comprenant un dispositif de modification et un dispositif de consultation tel que cités ci-dessus.

L'invention concerne aussi un dispositif de montage d'un message vocal global à partir d'un message vocal composé comprenant au moins une première et seconde composantes vocales et un groupe d'informations associé au message vocal composé. Le dispositif de montage comprend des moyens de lecture des au moins une première et seconde composantes vocales stockées et d'au moins une information du groupe d'informations associé au message vocal composé, et des moyens de concaténation des au moins une première et seconde composantes vocales en fonction de la au moins une information lue du groupe d'informations associé au message vocal composé.

L'invention concerne aussi un serveur comprenant un dispositif de montage tel que cité ci-dessus. L'invention concerne également un serveur comprenant un dispositif de modification et un dispositif de montage tels que cités ci-dessus.

L'invention concerne également un programme d'ordinateur comportant des instructions pour l'exécution du procédé de modification d'un message vocal composé selon l'un quelconque des modes particuliers de réalisation de l'invention décrits, lorsque le programme est exécuté par un processeur.

L'invention concerne également un programme d'ordinateur comportant des instructions pour l'exécution du procédé de consultation d'un message vocal composé selon l'un quelconque des modes particuliers de réalisation de l'invention décrits, lorsque le programme est exécuté par un processeur.

L'invention concerne également un programme d'ordinateur comportant des instructions pour l'exécution du procédé de montage d'un message vocal global selon l'un quelconque des modes particuliers de réalisation de l'invention décrits, lorsque le programme est exécuté par un processeur. L'invention concerne aussi un support d'enregistrement lisible par un processeur sur lequel est enregistré un programme comportant des instructions pour l'exécution du procédé de modification d'un message vocal composé selon l'un quelconque des modes particuliers de réalisation de l'invention cités.

L'invention concerne aussi un support d'enregistrement lisible par un processeur sur lequel est enregistré un programme comportant des instructions pour l'exécution du procédé de consultation d'un message vocal composé selon l'un quelconque des modes particuliers de réalisation de l'invention cités.

L'invention concerne aussi un support d'enregistrement lisible par un processeur sur lequel est enregistré un programme comportant des instructions pour l'exécution du procédé de montage d'un message vocal global selon l'un quelconque des modes particuliers de réalisation de l'invention cités.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 illustre des étapes du procédé de modification d'un message vocal composé selon un mode particulier de réalisation de l'invention,
- la figure 2 illustre des étapes du procédé de consultation d'un message vocal composé selon un mode particulier de réalisation de l'invention,
- la figure 3 illustre des étapes du procédé de montage d'un message vocal global selon un mode particulier de réalisation de l'invention
- la figure 4 montre la structure d'un dispositif mettant en oeuvre le procédé de modification d'un message vocal composé selon un mode particulier de réalisation de l'invention,
- la figure 5 montre la structure d'un dispositif mettant en oeuvre le procédé de consultation d'un message vocal composé selon un mode particulier de réalisation de l'invention,
- la figure 6 montre la structure d'un dispositif mettant en oeuvre le procédé de montage d'un message vocal global selon un mode particulier de réalisation de l'invention,
- la figure 7 montre un environnement de mise en oeuvre des procédés de modification d'un message vocal composé, de consultation d'un message vocal composé et de montage d'un message vocal global.
- les figures 8A et 8B représentent de manière schématique un message vocal composé selon un mode particulier de réalisation de l'invention,
- la figure 9 illustre une interface de visualisation d'un message vocal composé selon un mode particulier de réalisation du procédé de consultation d'un message vocal composé,
- la figure 10 illustre une interface de visualisation d'un message vocal composé selon un autre mode particulier de réalisation du procédé de consultation d'un message vocal composé.

### Description d'un mode particulier de réalisation de l'invention

La présente invention permet la consultation et la modification d'un message vocal composé d'au moins une composante vocale émise par au moins un utilisateur émetteur.

Le procédé de modification d'un message vocal composé permet à un utilisateur destinataire d'un message vocal initial de modifier le message vocal initial reçu afin d'ajouter une composante vocale supplémentaire au message vocal initial. Le destinataire du message vocal initial devient alors un émetteur du message vocal composé résultant.

Le message vocal initial peut être un message vocal ne comprenant qu'une composante vocale émise par un unique utilisateur émetteur. Le message vocal initial peut également être un message vocal composé comprenant plus d'une composante vocale émise par un ou plusieurs utilisateurs émetteurs différents.

Le message vocal composé comporte au moins une composante vocale et est associé à un groupe d'informations. Le groupe d'informations associé au message vocal composé peut par exemple comprendre des données associées à une composante vocale du message vocal composé. Ces données peuvent par exemple être une information de position de la composante vocale dans le message vocal composé, une information de durée de la composante vocale, une information d'horodatage de la création et/ou de la dernière modification de la composante vocale, une information relative à l'utilisateur émetteur de la composante vocale par exemple une identité, une adresse de contact ou un numéro de téléphone, une localisation.

Le groupe d'informations peut également comprendre des données globales relatives au message vocal composé. Par exemple, ces données peuvent correspondre à un historique des modifications effectuées sur le message vocal composé.

L'invention concerne un procédé de modification d'un message vocal composé d'au moins une composante vocale et d'un groupe d'informations associé au message vocal.

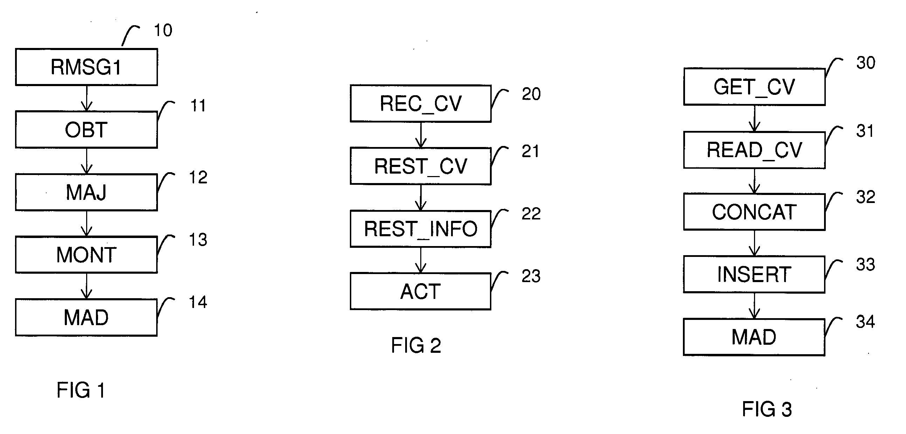

Les étapes du procédé de modification d'un message vocal composé selon un mode particulier de réalisation de l'invention sont illustrées en référence à la figure 1.

Dans le mode de réalisation décrit ci-dessous, le procédé de modification d'un message vocal est mis en oeuvre par le terminal d'un utilisateur. Selon ce mode de réalisation, le terminal de l'utilisateur dispose de moyens d'affichage des messages vocaux qu'il reçoit.

Selon ce mode de réalisation, le procédé de modification d'un message vocal comprend une étape 10 (RMSG1) de réception d'un message vocal et d'un groupe d'informations associé au message vocal.

Le groupe d'information associé au message vocal reçu comporte au moins une information d'horodatage relative à la création du message vocal. Le groupe d'information peut aussi comporter d'autres informations telles que celle décrites ci-dessus. Le message vocal reçu peut être un message vocal issu d'un unique émetteur et non modifié. Le message vocal reçu peut aussi être un message vocal composé comprenant au moins deux composantes vocales issues d'un ou plusieurs émetteurs.

Suite à l'écoute du message vocal, l'utilisateur peut décider d'insérer une ou des composantes vocales dans le message vocal reçu afin de le compléter ou pour répondre à l'utilisateur émetteur ou aux utilisateurs émetteurs du message vocal.

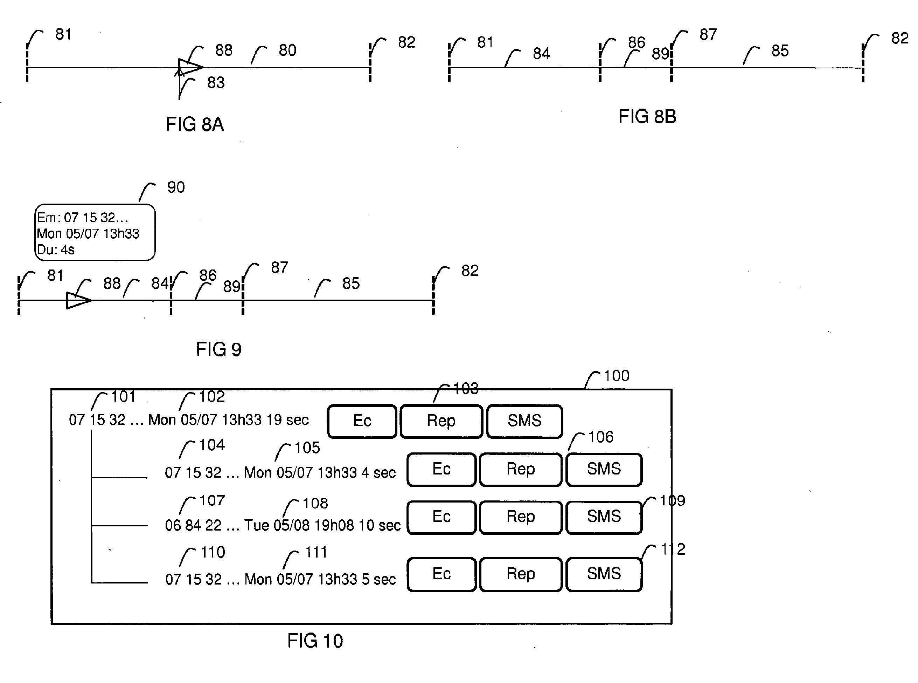

L'utilisateur sélectionne la position à laquelle il souhaite insérer la nouvelle composante vocale, via par exemple la sélection d'une position sur une ligne de temps représentant le message vocal, ainsi que représenté par la figure 8A décrite plus loin.

La figure 8A illustre une représentation visuelle d'un message vocal par une ligne de temps. Un curseur 88 avance le long de la ligne de temps au fur et à mesure de la lecture du message vocal. Dans cet exemple, le message vocal ne comprend qu'une composante vocale 80 dont le début est identifié par une donnée de marquage temporel 81 et la fin est identifiée par la fin du message vocal global 82. La composante vocale 80 peut également être identifiée par une donnée de marquage temporel de début 81 et une durée en secondes.

La position d'insertion d'une composante vocale sélectionnée par l'utilisateur est indiquée par une flèche 83 pointant sur un instant temporel de la ligne de temps.

Le terminal de l'utilisateur détermine alors la position temporelle dans le message vocal à partir de la position sélectionnée par l'utilisateur, par exemple le nombre de secondes relativement au début du message vocal.

Puis, le terminal de l'utilisateur acquiert la nouvelle composante vocale par l'enregistrement via le microphone du terminal de la voix de l'utilisateur lors d'une étape 11 (OBT) en référence à la figure 1.

Lorsque l'utilisateur indique la fin de l'enregistrement de la nouvelle composante vocale, le terminal enregistre la nouvelle composante vocale.

Lors d'une étape 12 (MAJ), le terminal met alors à jour le groupe d'informations associé au message vocal.

Le terminal met notamment à jour l'information de durée totale du message vocal afin d'ajouter la durée de la nouvelle composante vocale. Le terminal met également à jour les informations de position associées aux composantes vocales du message vocal relativement à la position d'insertion de la nouvelle composante vocale, notamment le rang de la composante vocale et les données de marquage temporel indiquant le début de la composante vocale. Lorsqu'une composante vocale est insérée à l'intérieur d'une composante vocale préexistante, la composante vocale préexistante est coupée en deux sous-composantes vocales et les données de marquage temporel associées à ces deux sous-composantes vocales sont créées et/ou mises à jour relativement à la position de la nouvelle composante vocale.

La figure 8B illustre la mise à jour des informations associées au message vocal. Suite à l'insertion d'une nouvelle composante vocale 89, la composante vocale initiale 80 est coupée en deux composantes vocales 84 et 85. De nouvelles données de marquage temporel sont insérées au début 86 de la nouvelle composante vocale 89, et au début 87 de la deuxième partie de la composante vocale initiale 80.

Le terminal peut également mettre à jour les informations relatives à l'émetteur de la nouvelle composante vocale et par exemple obtenir des informations de localisation via la géo-localisation de son terminal.

En référence à la figure 1, selon un mode particulier de réalisation de l'invention, le terminal peut créer le groupe d'informations associé au message vocal si ces informations n'existaient pas pour le message vocal initialement reçu à l'étape 10. Le terminal détermine alors et stocke des informations relatives à chaque composante vocale du message vocal, par exemple la durée en secondes de la composante vocale, les coordonnées de l'émetteur de cette composante vocale si elles sont disponibles, l'horodatage de dépôt initial du message. D'autres informations peuvent être créées telles que des informations relatives à la composante vocale elle-même, par exemple le texte correspondant si une transcription à l'aide d'une fonctionnalité de reconnaissance vocale est mise en oeuvre, ou si la composante vocale a été générée à partir de texte à l'aide d'une synthèse vocale.

Tout ou partie de ces informations peut être inséré dans le groupe d'informations associé au message vocal.

Selon un mode particulier de réalisation de l'invention, le terminal de l'utilisateur peut effectuer le montage audio du message vocal lors d'une étape 13 (MONT) en concaténant les composantes vocales du message vocal en fonction des informations du groupe d'informations associé au message vocal afin d'obtenir une séquence audio unique comprenant les composantes vocales. Selon un autre mode particulier de réalisation de l'invention, l'étape de montage peut aussi correspondre à un montage vidéo. Par exemple, l'utilisateur peut sélectionner une vidéo, un groupe de photos que le terminal insère avec la composante vocale dans le message vocal. La visualisation de l'animation insérée est alors concomitante pour le destinataire à l'écoute de la composante vocale ajoutée.

Lors d'une étape 14 (MAD), le terminal met à disposition le message vocal comprenant les composantes vocales du message vocal reçu et la nouvelle composante vocale ainsi que le groupe d'informations associé au message vocal mis à jour. Le message vocal ainsi modifié est mis à disposition d'au moins un utilisateur destinataire par exemple par une sauvegarde sur un serveur interrogeable par le destinataire.

En variante de ce mode particulier de réalisation de l'invention, le terminal de l'utilisateur peut insérer une composante telle qu'un silence ou une musique par exemple, entre les composantes vocales lors du montage. Suite à cette insertion, le groupe d'informations associé au message vocal est alors mis à jour de manière similaire qu'à l'étape 12.

Selon un autre mode particulier de réalisation de l'invention, le procédé de modification d'un message vocal peut être mis en oeuvre par un serveur distant du terminal de l'utilisateur. Ce mode de réalisation est particulièrement avantageux lorsque le terminal de l'utilisateur ne supporte pas le procédé de modification d'un message vocal.

Selon ce mode de réalisation, le procédé de modification d'un message vocal comprend une étape 10 (RMSG1) de réception d'un message vocal et du groupe d'informations associé au message vocal par le serveur distant.

En parallèle, le terminal de l'utilisateur reçoit le message vocal et restitue visuellement et/ou vocalement le message vocal à l'utilisateur. Lorsque l'utilisateur sélectionne la position d'insertion d'une nouvelle composante vocale dans le message vocal via par exemple l'envoi d'un code DTMF (pour Dual Tone Multiple Frequency en anglais), le serveur distant enregistre la composante vocale émise par l'utilisateur et la position de la composante vocale dans le message vocal, lors d'une étape 11.

Lors d'une étape 12, le serveur met à jour les informations associées aux composantes vocales du message et les informations globales associées au message vocal.

Selon un mode particulier de réalisation de l'invention, le groupe d'information mis à jour est envoyé par le serveur distant au terminal de l'utilisateur afin de mettre à jour la restitution du message vocal par le terminal.

Selon un autre mode particulier de réalisation de l'invention, lors d'une étape 13 (MONT), le serveur distant effectue le montage audio du message vocal tel qu'il sera décrit plus loin en référence à la figure 3.

Selon un autre mode particulier de réalisation de l'invention, l'étape 13 de montage audio est effectuée suite à la demande de consultation du message vocal en provenance de l'utilisateur destinataire.

Selon le mode de réalisation de l'invention, le message vocal peut être stocké sur un serveur de messagerie vocale du destinataire sous la forme de séquences audio indépendantes ou sous la forme d'une séquence audio unique. Le groupe d'informations peut par exemple être transmis et stockés selon le protocole HTTP (pour HyperText Transfer Protocol en anglais). Le groupe d'informations associé au message vocal peut être stocké sur le serveur de messagerie vocale du destinataire ou sur un serveur distinct. Lorsqu'il est stocké sur un serveur de données distinct du serveur de stockage des composantes vocales, le groupe d'informations contient alors au moins une référence au message vocal auquel il est associé.

Le procédé de consultation d'un message vocal composé est décrit en référence à la figure 2. Le message vocal composé peut par exemple avoir été créé ou modifié selon le procédé de modification décrit en référence à la figure 1.

Le procédé de consultation comprend une étape 20 (REC_CV) de réception d'un message vocal et du groupe d'informations associé au message vocal par le terminal d'un utilisateur.

Les composantes vocales du message vocal peuvent être reçues sous la forme de séquences audio indépendantes ou sous la forme d'une séquence audio unique issue d'un montage audio préalable des composantes vocales.

Selon le mode de réalisation de l'invention, les composantes vocales peuvent être téléchargées complètement depuis un serveur avant d'être restituées ou les composantes vocales peuvent être téléchargées progressivement en parallèle de leur restitution.

Lors d'une étape 21 (REST_CV), le terminal de l'utilisateur restitue sous une forme visuelle le message vocal reçu à l'aide du groupe d'informations associé au message vocal. Les informations associées au message vocal permettent au terminal de déterminer l'ordre dans lequel agencer les composantes vocales du message vocal lorsque celles-ci sont reçues sous la forme de séquences audio indépendantes.

Les informations associées au message vocal permettent également d'identifier les composantes vocales dans le message vocal lorsque celles-ci sont sous la forme d'une séquence audio unique. Lors de l'étape 21 de restitution, le terminal de l'utilisateur peut par exemple afficher le message vocal sous la forme d'une ligne de temps composée de segments correspondant chacun à une composante vocale du message.

Par exemple, en référence à la figure 9, un message vocal comprenant trois composantes vocales 84, 89 et 85 est affiché. Ce message vocal est par exemple issu du procédé de modification tel que décrit en référence aux figures 1, 8A et 8B. Le curseur 88 se déplace le long de la ligne de temps au fur et à mesure de la lecture du message vocal et indique dans cet exemple que la composante vocale en cours de lecture est la composante vocale 84.

L'utilisateur peut alors sélectionner la ou les composantes vocales du message qu'il souhaite écouter ou sur lesquelles il souhaite agir.

Selon un mode particulier de réalisation de l'invention, le terminal de l'utilisateur peut également jouer les composantes vocales simultanément à l'affichage des composantes vocales.

En référence à la figure 2, selon un mode particulier de réalisation de l'invention, lors d'une étape 22 (REST_INFO), le terminal de l'utilisateur restitue visuellement au moins une donnée du groupe d'informations associé au message vocal et relative à une composante vocale. Par exemple, comme illustré en figure 9, lorsque l'utilisateur sélectionne une composante vocale 84, les données associées à cette composante 90 sont affichées à l'utilisateur. Dans cet exemple, les données correspondent au numéro de l'émetteur Em de la composante vocale, la durée Du de la composante vocale et l'horodatage de la composante vocale.

En variante, les données ou une partie des données associées à une composante vocale peuvent être affichées au moment de la restitution vocale de la composante vocale.

En variante, le terminal peut afficher les composantes vocales du message vocal sous la forme d'une liste de séquences audio indépendantes à jouer, comme illustré en figure 10.

La figure 10 montre une interface graphique 100 affichant le message vocal illustré en figure 9 sous la forme d'une liste de séquences audio indépendantes. Sous cette forme, l'interface affichée à l'utilisateur comprend des informations globales 101 (numéro de téléphone de l'émetteur initial du message vocal), 102 (horodatage initial du message vocal) et 103 (actions possibles sur le message) associées au message vocal global et des informations associées respectivement à chaque composante vocale composant le message vocal.

Les informations associées au message vocal global ou composantes vocales correspondent par exemple :
- au numéro de téléphone de l'émetteur initial du message vocal 101 ou de l'émetteur de la composante vocale 104, 107, 110,
- à l'horodatage initial du message vocal 102 ou à l'horodatage de la composante vocale 105, 108, 111,
- aux actions possibles sur le message global 103 ou sur la composante vocal 106, 109, 112, ces actions peuvent correspondre par exemple à écouter la séquence audio (Ec), répondre à l'émetteur (Rep) ou envoyer un SMS à l'émetteur (SMS).

La première composante vocale associée aux informations 104, 105 et 106 correspond à la première partie 84 de la composante vocale initiale 80 du message vocal.

La troisième composante vocale associée aux informations 110, 111 et 112 correspond à la seconde partie 85 de la composante vocale initiale 80 du message vocal.

La deuxième composante vocale associée aux informations 107, 108 et 109 correspond à la composante vocale insérée 89 dans le message vocal par le procédé de modification par exemple. L'utilisateur peut sélectionner et écouter chaque composante vocale indépendamment.

En référence à la figure 2, selon un autre mode particulier de réalisation de l'invention, lors d'une étape 23 (ACT), le terminal de l'utilisateur affiche au moins une action pouvant être exécutée et définie en fonction d'au moins une information associée à une composante vocale en cours de restitution vocalement ou sélectionnée par l'utilisateur. L'action pouvant être exécutée peut par exemple correspondre à :
- lire la composante vocale en cours de restitution vocalement ou sélectionnée,
- répondre à l'utilisateur émetteur de la composante vocale,
- transférer le message vocal à l'utilisateur émetteur de la composante vocale,
- insérer une nouvelle composante vocale avant ou après la composante vocale,
- ajouter une notification d'un évènement associé à la composante vocale ou à l'utilisateur émetteur de la composante vocale, par exemple : une notification de délai pour répondre à l'utilisateur émetteur,
- sauvegarder la composante vocale sous la forme d'un fichier audio reproductible,
- supprimer une composante vocale.

Selon un autre mode particulier de réalisation de l'invention, le terminal de l'utilisateur affiche au moins une action pouvant être exécutée et définie en fonction d'au moins une information globale associée au message vocal. Cette action peut par exemple correspondre à lire le message vocal, répondre à tous les utilisateurs ayant émis une composante vocale du message vocal, transférer le message vocal à un utilisateur destinataire, sauvegarder le message vocal.

Selon un mode particulier de réalisation de l'invention, l'utilisateur peut par exemple ensuite décider d'insérer une ou des composantes vocales dans le message vocal reçu afin de le compléter ou pour répondre à l'utilisateur émetteur ou aux utilisateurs émetteurs du message vocal. Les étapes 11 et 12 du procédé de modification telles que décrites en référence avec la figure 1 sont alors mises en oeuvre par le terminal de l'utilisateur.

Suite à la mise à jour du groupe d'informations associé au message vocal lors de l'étape 12, le terminal de l'utilisateur peut mettre à jour la restitution visuelle du message vocal effectuée à l'étape 21 afin d'afficher la position et/ou le segment correspondant à la nouvelle composante vocale enregistrée. Lors d'une étape 14 (MAD), le terminal met à disposition le message vocal comprenant les composantes vocales du message vocal reçu et la nouvelle composante vocale ainsi que le groupe d'informations associé au message vocal mis à jour. Le message vocal ainsi modifié est mis à disposition d'au moins un utilisateur destinataire. L'utilisateur destinataire peut être l'utilisateur émetteur du message vocal ou les utilisateurs émetteurs d'une composante vocale du message vocal ou bien être déterminé en fonction d'une action affichée à l'étape 23 et sélectionnée par l'utilisateur.

La figure 3 montre les étapes du procédé de montage d'un message vocal global selon un mode particulier de réalisation de l'invention. Le montage audio du message vocal peut être effectué par le serveur de messagerie vocale stockant le message vocal ou par un serveur associé au serveur de messagerie vocale. En référence à la figure 3, lorsque les composantes vocales sont stockées sous la forme de séquences audio indépendantes, le serveur obtient les composantes vocales stockées et le groupe d'informations associé au message vocal lors d'une étape 30 (GET_CV). Le serveur lit les informations associées aux composantes vocales lors d'une étape 31 (READ_CV). A l'aide des informations associées aux composantes vocales, notamment les informations de positions et de durée des composantes vocales, le serveur concatène les composantes vocales lors d'une étape 32 (CONCAT).

Selon un mode particulier de réalisation de l'invention, lors du montage audio, le serveur insère lors d'une étape 33 (INSERT) entre deux composantes vocales du message vocal, au moins composante vocale synthétisée correspondant à une information associée à la composante vocale suivante qui sera concaténée. Les informations associées aux composantes vocales peuvent ainsi être lues à l'utilisateur destinataire du message vocal lors de la restitution vocale du message. Ainsi, l'utilisateur destinataire a accès à ces informations même lorsque ces informations ne peuvent lui être affichées, par exemple à cause des capacités de son terminal ou d'une déficience visuelle de l'utilisateur destinataire. Dans ce mode de réalisation, une version des composantes vocales sous la forme de séquences audio indépendantes est conservée pour un usage ultérieur par le destinataire à partir d'un terminal évolué, ayant des capacités d'affichage du message vocal composé tel que décrit dans la présente invention, ou si le destinataire répond à un des émetteurs du message et que cet émetteur dispose d'un terminal évolué.

Le message vocal est ensuite mis à disposition de l'utilisateur destinataire lors d'une étape 34 (MAD) similaire à l'étape 14 de la figure 1.

Selon un mode particulier de réalisation de l'invention, le montage audio du message vocal peut être effectué lors de la mise à disposition des composantes vocales et du groupe d'informations associé au message vocal par le terminal de l'utilisateur émetteur.

Selon un autre mode particulier de réalisation de l'invention, le montage audio du message vocal peut être effectué suite à la demande de consultation du message vocal en provenance de l'utilisateur destinataire.

Selon un autre mode particulier de réalisation de l'invention, lors de la consultation du message vocal par un utilisateur destinataire par exemple par le procédé de consultation tel que décrit en référence à la figure 2, le serveur de messagerie vocal ou le serveur d'application permettant l'accès du terminal de l'utilisateur au service de messagerie met en oeuvre une étape de détermination de la compatibilité du terminal de l'utilisateur avec les fonctionnalités offertes par le message vocal composé et notamment la capacité du terminal à traiter le groupe d'informations associé au message vocal et la capacité à traiter les composantes vocales indépendamment.

Par exemple, les caractéristiques du terminal peuvent être stockées sur un serveur, par exemple au niveau d'un carnet d'adresse réseau. Les caractéristiques du terminal peuvent aussi avoir été enregistrées lors d'une précédente utilisation du service de messagerie vocale, ou si l'utilisateur a installé sur son terminal une application nécessaire au fonctionnement d'un service de messagerie vocale proposant la modification d'un message vocal composé telle que décrite selon le procédé de la présente invention.

Selon le terminal n'est pas compatible avec les fonctionnalités offertes par le message vocal composé, le procédé de montage audio décrit en figure 3 est mis en oeuvre. En variante, l'étape 33 d'insertion d'une composante vocale synthétisée en référence à la figure 3 peut également être mise en oeuvre.

Selon un mode particulier de réalisation de l'invention, lors du montage audio par un serveur distant ou lors de l'enregistrement d'une nouvelle composante vocale par l'utilisateur, la nouvelle composante vocale peut correspondre à une composante vocale prédéfinie. Par exemple, la composante vocale prédéfinie peut correspondre à un silence d'une durée prédéterminée, un flux audio musical choisi en fonction de l'utilisateur destinataire ou émetteur, un flux audio publicitaire.

Lors de l'insertion d'une composante vocale prédéfinie, le serveur ou le terminal mettant en oeuvre le procédé de modification d'un message vocal met en oeuvre l'étape de mise à jour des informations associées aux composantes vocales et l'étape de mise à disposition du message vocal modifié.

Selon un autre mode particulier de réalisation de l'invention, lors du montage audio par un serveur distant, un bruitage sonore, par exemple musical, peut être apposé sur la séquence audio du message vocal monté. Le niveau sonore relatif de ce bruitage doit être d'un niveau compatible avec le niveau sonore des voix des composantes vocales du message, afin de ne pas interférer avec celles-ci et afin de ne pas perturber la compréhension du message final par le destinataire. Le niveau sonore relatif de ce bruitage peut être établi en fonction de paramètres propres au destinataire, comme son niveau relatif d'audition si cette information est disponible et accessible ou en fonction de son âge par exemple. Le bruitage à employer peut quant à lui être choisi dans une base de données musicale dont l'opérateur du procédé possède les droits, ou en variante choisi par l'émetteur, ou en fonction de préférences prédéfinies de l'émetteur ou du destinataire.

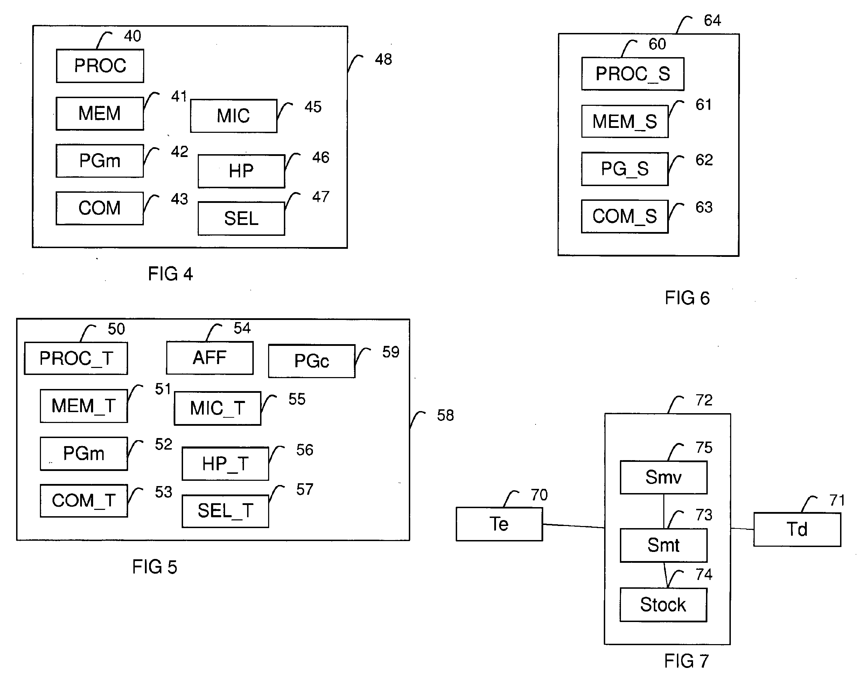

La figure 4 montre la structure d'un dispositif 48 mettant en oeuvre le procédé de modification d'un message vocal composé selon un mode particulier de réalisation de l'invention, par exemple celui décrit en référence avec la figure 1. Le dispositif comprend une mémoire 41 comprenant une mémoire tampon (MEM), une unité de traitement 40, équipée par exemple d'un processeur (PROC), et pilotée par le programme d'ordinateur (PG) 42, mettant en oeuvre le procédé de modification d'un message vocal composé.

A l'initialisation, les instructions de code du programme d'ordinateur 42 sont par exemple chargées dans une mémoire RAM avant d'être exécutées par le processeur de l'unité de traitement 40. Le processeur de l'unité de traitement 40 met en oeuvre les étapes du procédé de modification d'un message vocal composé comprenant au moins une première composante vocale selon l'invention décrit précédemment et notamment les étapes d'obtention d'au moins une seconde composante vocale, de mise à jour d'au moins une information appartenant à un groupe d'informations associé au message vocal composé en fonction de la au moins une seconde composante vocale, et de mise à disposition du message vocal composé comprenant les au moins une première et seconde composantes vocales, et le groupe d'informations associé au message vocal composé, selon les instructions du programme d'ordinateur 42.

Pour cela, le dispositif comprend, outre la mémoire tampon 41, des moyens de communication (COM) 43. Ces moyens de communication peuvent par exemple correspondre à une interface réseau permettant au dispositif de se connecter à un réseau de communication de type Internet ou un réseau mobile ou autre.

Selon un mode particulier de réalisation de l'invention, le dispositif 48 comprend également des moyens d'acquisition 45 d'une seconde composante vocale énoncée par un utilisateur tels que par exemple un microphone (MIC) et des moyens de restitution sonore 46 du message vocal tels que par exemple un haut-parleur (HP) ou une sortie son permettant de connecter un casque.

Selon un autre mode particulier de réalisation de l'invention, le dispositif 48 comprend aussi des moyens de sélection 47 (SEL) permettant à un utilisateur de sélectionner une position d'insertion d'une composante vocale à insérer dans le message vocal lu. Ces moyens de sélection peuvent correspondre aux touches d'un clavier.

Le dispositif 48 peut par exemple correspondre à un terminal mobile ou fixe, ou un terminal de type smartphone (téléphone intelligent en anglais) ou à un serveur de traitement de données.

La figure 5 montre la structure d'un dispositif 58 mettant en oeuvre le procédé de consultation d'un message vocal composé selon un mode particulier de réalisation de l'invention, par exemple celui décrit en référence avec la figure 2. Le dispositif comprend une mémoire 51 comprenant une mémoire tampon (MEM_T), une unité de traitement 50, équipée par exemple d'un processeur (PROC_T), et pilotée par le programme d'ordinateur (PGc) 59, mettant en oeuvre le procédé de consultation d'un message vocal composé.

A l'initialisation, les instructions de code du programme d'ordinateur 59 sont par exemple chargées dans une mémoire RAM avant d'être exécutées par le processeur de l'unité de traitement 50. Le processeur de l'unité de traitement 50 met en oeuvre les étapes du procédé de consultation d'un message vocal composé selon l'invention décrit précédemment et notamment les étapes de réception d'au moins une première composante vocale du message vocal composé et du groupe d'informations associé au message vocal composé et de restitution sous une forme visuelle et/ou vocale de la au moins une première composante vocale en fonction du groupe d'informations associé au message vocal composé, selon les instructions du programme d'ordinateur 59.

Pour cela, le dispositif comprend, outre la mémoire tampon 51, des moyens de communication (COM_T) 53. Ces moyens de communication peuvent par exemple correspondre à une interface réseau permettant au dispositif de se connecter à un réseau de communication de type Internet ou un réseau mobile ou autre.

Selon un mode particulier de réalisation de l'invention, le dispositif 58 comprend également des moyens de restitution sonore 56 du message vocal tels que par exemple un haut-parleur (HP_T) ou une sortie son permettant de connecter un casque.

Selon un autre mode particulier de réalisation de l'invention, le dispositif 58 comprend aussi des moyens d'affichage 54 (AFF) permettant de restituer visuellement le message vocal composé et/ou au moins une information du groupe d'informations associé au message vocal composé, tels que par exemple un écran.

Selon un autre mode particulier de réalisation de l'invention, le dispositif 58 est aussi apte à mettre en oeuvre le procédé de modification d'un message vocal composé par exemple tel que décrit en référence à la figure 1. Pour cela, le dispositif 58 comprend un programme d'ordinateur (PGm) 52, mettant en oeuvre le procédé de modification d'un message vocal composé.

A l'initialisation, les instructions de code du programme d'ordinateur 52 sont par exemple chargées dans une mémoire RAM avant d'être exécutées par le processeur de l'unité de traitement 50. Le processeur de l'unité de traitement 50 met en oeuvre les étapes du procédé de modification d'un message vocal composé comprenant au moins une première composante vocale selon l'invention décrit précédemment et notamment les étapes d'obtention d'au moins une seconde composante vocale, de mise à jour d'au moins une information appartenant à un groupe d'informations associé au message vocal composé en fonction de la au moins une seconde composante vocale, et de mise à disposition du message vocal composé comprenant les au moins une première et seconde composantes vocales, et le groupe d'informations associé au message vocal composé, selon les instructions du programme d'ordinateur 52.

Selon ce mode particulier de réalisation de l'invention, le dispositif 58 comprend des moyens d'acquisition 55 d'une seconde composante vocale énoncée par un utilisateur tels que par exemple un microphone (MIC_T).

Selon un autre mode particulier de réalisation de l'invention, le dispositif 58 comprend aussi des moyens de sélection 57 (SEL_T) permettant à un utilisateur de sélectionner une composante vocale à jouer ou sélectionner une action pouvant être exécutée définie en fonction d'au moins une information associée à une composante vocale restituée par exemple. Ces moyens de sélection peuvent correspondre à un dispositif de pointage par exemple une souris ou encore à une interface tactile d'un écran.

Le dispositif 58 peut par exemple correspondre à un terminal mobile ou fixe, ou un terminal de type smartphone (téléphone intelligent en anglais).

La figure 6 montre la structure d'un dispositif 64 mettant en oeuvre le procédé de montage d'un message vocal global selon un mode particulier de réalisation de l'invention, par exemple le procédé décrit en référence avec la figure 3.

Le dispositif comprend une mémoire 61 comprenant une mémoire tampon (MEM_S), une unité de traitement 60, équipée par exemple d'un processeur (PROC_S), et pilotée par le programme d'ordinateur (PGmt) 62, mettant en oeuvre le procédé de montage d'un message vocal global.

A l'initialisation, les instructions de code du programme d'ordinateur 62 sont par exemple chargées dans une mémoire RAM avant d'être exécutées par le processeur de l'unité de traitement 60. Le processeur de l'unité de traitement 60 met en oeuvre les étapes du procédé de montage d'un message vocal global à partir d'un message vocal composé comprenant au moins une première et seconde composantes vocales et un groupe d'informations associé au message vocal composé, selon l'invention décrit précédemment et notamment les étapesde lecture des au moins une première et seconde composantes vocales stockées et d'au moins une information du groupe d'informations associé au message vocal composé, et de concaténation des au moins une première et seconde composantes vocales en fonction de la au moins une information lue du groupe d'informations associé au message vocal composé, selon les instructions du programme d'ordinateur 62.

Pour cela, le dispositif comprend, outre la mémoire tampon 61, des moyens de communication (COM_S) 63. Ces moyens de communication peuvent par exemple correspondre à une interface réseau permettant au dispositif de se connecter à un réseau de communication de type Internet ou un réseau mobile ou autre.

Le dispositif 64 peut par exemple correspondre à un serveur de traitement de données ou un serveur de messagerie vocale.

La figure 7 montre un environnement de mise en oeuvre des procédés de modification d'un message vocal composé, de consultation d'un message vocal composé et de montage d'un message vocal global.

Le terminal 70 (Te) peut par exemple correspondre au terminal d'un utilisateur émetteur mettant en oeuvre le procédé de modification d'un message vocal composé tel que décrit à la figure 1. A la réception d'un message vocal, l'utilisateur du terminal 70 modifie ce message par exemple en ajoutant une composante vocale et l'envoie à l'utilisateur d'un terminal 71 (Td). En attendant que l'utilisateur consulte le message modifié, le message vocal composé est stocké sur un système de messagerie 72.

Selon le mode de réalisation, le système de messagerie peut comporter un serveur de messagerie vocale 75 (Smv) permettant à un utilisateur d'accéder aux messages vocaux dont il est destinataire. Le serveur de messagerie 75 peut par exemple stocker une information indiquant qu'un message vocal composé est stocké pour ce destinataire. Les différentes composantes vocales et le groupe d'information associé au message vocal composé peuvent être stockés sur un serveur de stockage 74 (Stock) auquel le serveur 75 accède lorsque le terminal 71 envoie une requête de consultation de messages reçus.

Le serveur 75 transmet alors au terminal 71 le message vocal composé. Le terminal 71 met alors en oeuvre le procédé de consultation d'un message vocal composé tel que décrit dans l'invention.

Si le terminal du destinataire 71 ne supporte pas la restitution du message vocal composé sous la forme de séquences vocales indépendantes, le serveur de montage 73 (Smt) du système de messagerie 72 peut à la demande effectuer un montage audio d'un message vocal global à partir des composantes vocales et du groupe d'information associé au message vocal selon le procédé décrit à la figure 3 par exemple. Le message vocal global est ensuite transmis au destinataire 71. Selon un autre mode de réalisation, si le terminal 70 n'a pas les capacités pour supporter le procédé de modification d'un message vocal tel que décrit dans l'invention, cette fonctionnalité peut être proposé à l'utilisateur du terminal 70 par le serveur de messagerie 75 ou un serveur distinct (non représenté sur la figure 7) du système 72. Le serveur de messagerie 75 met alors en oeuvre le procédé de modification tel que décrit dans l'invention.

## Revendications

1. Procédé de modification d'un message vocal composé comprenant au moins une première composante vocale, le procédé est **caractérisé en ce qu'il** comprend :
- une étape d'obtention (11) d'au moins une seconde composante vocale,
- une étape de mise à jour (12) d'au moins une information appartenant à un groupe d'informations associé au message vocal composé en fonction de la au moins une seconde composante vocale,
- une étape de mise à disposition (14) du message vocal composé comprenant les au moins une première et seconde composantes vocales et le groupe d'informations associé au message vocal composé, le message vocal composé étant destiné à être consulté par au moins un utilisateur destinataire, le groupe d'informations associé au message vocal composé étant disponible pour une consultation ultérieure par l'utilisateur destinataire.

2. Procédé de modification d'un message vocal composé selon la revendication 1 **caractérisé en ce que** le groupe d'informations associé au message vocal composé comprend au moins une première, respectivement une seconde, information associée à la au moins une première, respectivement seconde, composante vocale.

3. Procédé de modification d'un message vocal selon la revendication 2 **caractérisé en ce que** l'information associée à une composante vocale appartient à un groupe comprenant :
- une information de position de la composante vocale dans le message vocal composé,
- une information de durée de la composante vocale,
- au moins une information relative à l'utilisateur émetteur de la composante vocale,
- la transcription textuelle de la composante vocale,
- une information d'horodatage relative à la composante vocale.

4. Procédé de modification d'un message vocal composé selon l'une quelconque des revendications 1 ou 2 **caractérisé en ce qu'il** comprend une étape de montage (13) d'un message vocal global par concaténation des au moins une première et seconde composantes vocales en fonction d'au moins une information du groupe d'informations associé au message vocal composé, l'étape de montage du message vocal global étant effectuée suite à la réception d'une demande de consultation du message vocal composé en provenance de l'utilisateur destinataire.

5. Procédé de modification d'un message vocal composé selon la revendication 1 **caractérisé en ce que** la seconde composante vocale est une composante vocale prédéfinie appartenant à un groupe comprenant :
un silence,
un flux audio musical choisi en fonction du au moins un utilisateur destinataire,
- un flux audio publicitaire.

6. Procédé de consultation par un utilisateur destinataire d'un message vocal composé, le message vocal composé comprenant au moins une première et une seconde composantes vocales et un groupe d'informations associé au message vocal composé et **caractérisé en ce que** le procédé comprend les étapes suivantes:
- réception (20) par un terminal de l'utilisateur destinataire, d'au moins une première composante vocale du message vocal composé et du groupe d'informations associé au message vocal composé,
- restitution (21) par le terminal de l'utilisateur destinataire, sous une forme visuelle et/ou vocale de la au moins une première composante vocale en fonction du groupe d'informations associé au message vocal composé,
- restitution visuelle (22) d'au moins une information appartenant au groupe d'informations associé au message vocal composé, la au moins une information étant associée à la première composante vocale restituée.

7. Procédé de consultation selon la revendication 6 **caractérisé en ce qu'**il comprend une étape d'affichage (23) d'au moins une action pouvant être exécutée, l'action pouvant être exécutée étant définie en fonction d'au moins une information associée à une composante vocale restituée et appartenant au groupe d'informations associé au message vocal composé.

8. Dispositif de modification d'un message vocal composé comprenant au moins une première composante vocale, le dispositif est **caractérisé en ce qu'**il comprend :
des moyens d'obtention d'au moins une seconde composante vocale,
des moyens de mise à jour d'au moins une information appartenant à un groupe d'informations associé au message vocal composé en fonction de la au moins une seconde composante vocale,
- des moyens de mise à disposition du message vocal composé comprenant les au moins une première et seconde composantes vocales et le groupe d'informations associé au message vocal composé, le message vocal composé étant destiné à être consulté par au moins un utilisateur destinataire, le groupe d'informations associé au message vocal composé étant disponible pour une consultation ultérieure par l'utilisateur destinataire.

9. Serveur comprenant un dispositif selon la revendication 8.

10. Terminal comprenant un dispositif selon revendication 8.

11. Terminal de consultation d'un message vocal composé, le message vocal composé comprenant au moins une première et une seconde composantes vocales et un groupe d'informations associé au message vocal composé et **caractérisé en ce que** le terminal comprend :
- des moyens de réception d'au moins une première composante vocale du message vocal composé et du groupe d'informations associé au message vocal composé,
- des moyens de restitution sous une forme visuelle et/ou vocale de la au moins une première composante vocale en fonction du groupe d'informations associé au message vocal composé,
- des moyens de restitution visuelle d'au moins une information appartenant au groupe d'informations associé au message vocal composé, la au moins une information étant associé à la première composante vocale restituée.

12. Programme d'ordinateur comportant des instructions pour l'exécution du procédé de modification d'un message vocal composé selon l'une quelconque des revendications 1 à 5 et/ou du procédé de consultation d'un message vocal composé selon l'une quelconque des revendications 6 ou 7, lorsque le programme est exécuté par un processeur.

## Patentansprüche

1. Verfahren zum Modifizieren einer zusammengesetzten Sprachnachricht, die wenigstens eine erste Sprachkomponente enthält, wobei das Verfahren **dadurch gekennzeichnet ist, dass** es Folgendes umfasst:
- einen Schritt (11) zum Erhalten wenigstens einer zweiten Sprachkomponente,
- einen Schritt (12) zum Aktualisieren wenigstens einer Information, die zu einer Gruppe von Informationen gehört, die einer zusammengesetzten Sprachnachricht zugeordnet ist, als Funktion der wenigstens einen zweiten Sprachkomponente,
- einen Schritt (14) zum Verfügbarmachen der zusammengesetzten Sprachnachricht, die die wenigstens eine erste und die wenigstens eine zweite Sprachkomponente enthält, und der Gruppe von Informationen, die der zusammengesetzten Sprachnachricht zugeordnet ist, wobei die zusammengesetzte Sprachnachricht dazu bestimmt ist, von wenigstens einem Zielanwender konsultiert zu werden, wobei die der zusammengesetzten Sprachnachricht zugeordnete Gruppe von Informationen für eine spätere Konsultation durch den Zielanwender verfügbar ist.

2. Verfahren zum Modifizieren einer zusammengesetzten Sprachnachricht nach Anspruch 1, **dadurch gekennzeichnet, dass** die der zusammengesetzten Sprachnachricht zugeordnete Gruppe von Informationen wenigstens eine erste bzw. eine zweite Information enthält, die der wenigstens einen ersten bzw. der wenigstens einen zweiten Sprachkomponente zugeordnet ist.

3. Verfahren zum Modifizieren einer Sprachnachricht nach Anspruch 2, **dadurch gekennzeichnet, dass** die einer Sprachkomponente zugeordnete Information zu einer Gruppe gehört, die Folgendes umfasst:
- eine Information über die Position der Sprachkomponente in der zusammengesetzten Sprachnachricht,
- eine Information über die Dauer der Sprachkomponente,
- wenigstens eine Information bezüglich eines die Sprachkomponente sendenden Anwenders,
- die Texttranskription der Sprachkomponente,
- eine Datum- und Uhrzeitinformation bezüglich der Sprachkomponente.

4. Verfahren zum Modifizieren einer zusammengesetzten Sprachnachricht nach einem der Ansprüche 1 oder 2, **dadurch gekennzeichnet, dass** es einen Schritt (13) zum Zusammenfügen einer globalen Sprachnachricht durch Verknüpfen der wenigstens einen ersten und der wenigstens einen zweiten Sprachkomponente als Funktion wenigstens einer Information der Gruppe von Informationen, die der zusammengesetzten Sprachnachricht zugeordnet ist, umfasst, wobei der Schritt des Zusammenfügens der globalen Sprachnachricht nach dem Empfang einer Anforderung zum Konsultieren der zusammengesetzten Sprachnachricht, die von dem Zielanwender stammt, ausgeführt wird.

5. Verfahren zum Modifizieren einer zusammengesetzten Sprachnachricht nach Anspruch 1, **dadurch gekennzeichnet, dass** die zweite Sprachkomponente eine im Voraus definierte Sprachkomponente ist, die zu einer Gruppe gehört, die Folgendes umfasst:
- Stille,
- einen Musik-Audiostrom, der als Funktion des wenigstens einen Zielanwenders gewählt wird,
- einen Reklame-Audiostrom.

6. Verfahren zum Konsultieren einer zusammengesetzten Sprachnachricht durch einen Zielanwender, wobei die zusammengesetzte Sprachnachricht wenigstens eine erste und eine zweite Sprachkomponente und eine Gruppe von Informationen, die der zusammengesetzten Sprachnachricht zugeordnet ist, enthält, und **dadurch gekennzeichnet, dass** das Verfahren die folgenden Schritte umfasst:
- Empfangen (20) durch ein Endgerät des Zielanwenders wenigstens einer ersten Sprachkomponente der zusammengesetzten Sprachnachricht und der Gruppe von Informationen, die der zusammengesetzten Sprachnachricht zugeordnet ist,
- Wiederherstellen (21) durch das Endgerät des Zielanwenders in visueller und/oder sprachlicher Form der wenigstens einen ersten Sprachkomponente als Funktion der Gruppe von Informationen, die der zusammengesetzten Sprachnachricht zugeordnet ist,
- visuelles Wiederherstellen (22) wenigstens einer Information, die zu der Gruppe von Informationen gehört, die der zusammengesetzten Sprachnachricht zugeordnet ist, wobei die wenigstens eine Information der ersten wiederhergestellten Sprachkomponente zugeordnet ist.

7. Konsultationsverfahren nach Anspruch 6, **dadurch gekennzeichnet, dass** es einen Schritt (23) des Anzeigens wenigstens einer Aktion, die ausgeführt werden kann, umfasst, wobei die Aktion, die ausgeführt werden kann, als Funktion wenigstens einer Information definiert ist, die einer wiederhergestellten Sprachkomponente zugeordnet ist und zu einer Gruppe von Informationen gehört, die der zusammengesetzten Sprachnachricht zugeordnet ist.

8. Vorrichtung zum Modifizieren einer zusammengesetzten Sprachnachricht, die wenigstens eine erste Sprachkomponente umfasst, wobei die Vorrichtung **dadurch gekennzeichnet ist, dass** sie Folgendes umfasst:
- Mittel zum Erhalten wenigstens einer zweiten Sprachkomponente,
- Mittel zum Aktualisieren wenigstens einer Information, die zu der Gruppe von Information gehört, die der zusammengesetzten Sprachnachricht zugeordnet ist, als Funktion der wenigstens einen zweiten Sprachkomponente,
- Mittel zum Verfügbarmachen der zusammengesetzten Sprachnachricht, die wenigstens die erste und die zweite Sprachkomponente und die Gruppe von Informationen, die der zusammengesetzten Sprachkomponente zugeordnet ist, enthält, wobei die zusammengesetzte Sprachkomponente dazu bestimmt ist, durch wenigstens einen Zielanwender konsultiert zu werden, wobei die Gruppe von Informationen, die der zusammengesetzten Sprachnachricht zugeordnet ist, für eine spätere Konsultation durch den Zielanwender verfügbar ist.

9. Server, der eine Vorrichtung nach Anspruch 8 umfasst.

10. Endgerät, das eine Vorrichtung nach Anspruch 8 umfasst.

11. Endgerät zum Konsultieren einer zusammengesetzten Sprachnachricht, wobei die zusammengesetzte Sprachnachricht wenigstens eine erste und eine zweite Sprachkomponente und eine Gruppe von Informationen, die der zusammengesetzten Sprachnachricht zugeordnet ist, enthält, und **dadurch gekennzeichnet, dass** das Endgerät Folgendes umfasst:
- Mittel zum Empfangen wenigstens einer ersten Sprachkomponente der zusammengesetzten Sprachnachricht und der Gruppe von Informationen, die der zusammengesetzten Sprachnachricht zugeordnet ist,
- Mittel zum Wiederherstellen in visueller und/oder sprachlicher Form wenigstens der ersten Sprachkomponente als Funktion der Gruppe von Informationen, die der zusammengesetzten Sprachnachricht zugeordnet ist,
- Mittel zum visuellen Wiederherstellen wenigstens einer Information, die zu der Gruppe von Informationen gehört, die der zusammengesetzten Sprachnachricht zugeordnet ist, wobei die wenigstens eine Information der ersten wiederhergestellten Sprachkomponente zugeordnet ist.

12. Computerprogramm, das Befehle zum Ausführen des Verfahrens zum Modifizieren einer zusammengesetzten Sprachnachricht nach einem der Ansprüche 1 bis 5 und/oder des Verfahrens zum Konsultieren einer zusammengesetzten Sprachnachricht nach einem der Ansprüche 6 oder 7, wenn das Programm von einem Prozessor ausgeführt wird, umfasst.

## Claims

1. Method of modifying a compounded voice message comprising at least one first voice component, the method is **characterized in that** it comprises:
- a step (11) of obtaining at least one second voice component,
- a step (12) of updating at least one item of information belonging to a group of items of information associated with the compounded voice message as a function of the at least one second voice component,
- a step (14) of making available the compounded voice message comprising the at least one first and second voice components, and the group of items of information associated with the compounded voice message, the compounded voice message being intended to be consulted by at least one recipient user, the group of items of information associated with the compounded voice message being available for later consultation by the recipient user.

2. Method of modifying a compounded voice message according to Claim 1, **characterized in that** the group of items of information associated with the compounded voice message comprises at least one first, respectively one second, item of information associated with the at least one first, respectively second, voice component.

3. Method of modifying a voice message according to Claim 2, **characterized in that** the item of information associated with a voice component belongs to a group comprising:
- an item of information of position of the voice component in the compounded voice message,
- an item of information of duration of the voice component,
- at least one item of information relating to the sender user who emitted the voice component,
- the textual transcription of the voice component,
- a time-stamping item of information relating to the voice component.

4. Method of modifying a compounded voice message according to either one of Claims 1 and 2, **characterized in that** it comprises a step (13) of editing a global voice message by concatenating the at least one first and second voice components as a function of at least one item of information of the group of items of information associated with the compounded voice message, the step of editing the global voice message being performed subsequent to the receipt of a request to consult the compounded voice message originating from the recipient user.

5. Method of modifying a compounded voice message according to Claim 1, **characterized in that** the second voice component is a predefined voice component belonging to a group comprising:
- a silence,
- a musical audio stream chosen as a function of the at least one recipient user,
- an advertising audio stream.

6. Method of consultation by a recipient user of a compounded voice message, the compounded voice message comprising at least one first and one second voice component and a group of items of information associated with the compounded voice message and **characterized in that** the method of consultation comprises the following steps:
- reception (20) by a terminal of the recipient user of at least one first voice component of the compounded voice message and of the group of items of information associated with the compounded voice message,
- restoration (21) by the terminal of the recipient user in a visual and/or voice form of the at least one first voice component as a function of the group of items of information associated with the compounded voice message,
- visual restoration (22) of at least one item of information belonging to the group of items of information associated with the compounded voice message, the at least one item of information being associated with a voice component of the compounded voice message.

7. Method of consultation according to Claim 6, **characterized in that** it comprises a step (23) of displaying at least one action that can be executed, the action that can be executed being defined as a function of at least one item of information associated with a voice component restored and belonging to the group of items of information associated with the compounded voice message.

8. Device for modifying a compounded voice message comprising at least one first voice component, the device is **characterized in that** it comprises:
- means for obtaining at least one second voice component,
- means for updating at least one item of information belonging to a group of items of information associated with the compounded voice message as a function of the at least one second voice component,
- means for making available the compounded voice message comprising the at least one first and second voice components, and the group of items of information associated with the compounded voice message, the compounded voice message being intended to be consulted by at least one recipient user, the group of items of information associated with the compounded voice message, the compounded voice message being intended to be consulted by at least one recipient user, the group of items of information associated with the compounded voice message being available for later consultation by the recipient user.

9. Server comprising a device according to Claim 8.

10. Terminal comprising a device according to Claim 8.

11. Terminal for consulting a compounded voice message, the compounded voice message comprising at least one first and one second voice component and a group of items of information associated with the compounded voice message and **characterized in that** the terminal comprises:
- means for receiving at least one first voice component of the compounded voice message and the group of items of information associated with the compounded voice message,
- means for restoring in a visual and/or voice form the at least one first voice component as a function of the group of items of information associated with the compounded voice message,
- means of visual restoration of at least one item of information belonging to the group of items of information associated with the compounded voice message, the at least one item of information being associated with a voice component of the compounded voice message.

12. Computer program comprising instructions for the execution of the method of modifying a compounded voice message according to any one of Claims 1 to 12 and/or of the method of consulting a compounded voice message according to either one of Claims 6 and 7, when the program is executed by a processor.
